Europäisches Patentamt

(19) European Patent Office

Office européen des brevets

(11) Publication number: **0 102 229**
**B1**

## (12) EUROPEAN PATENT SPECIFICATION

(45) Date of publication of patent specification: **18.03.87**

(21) Application number: **83304820.0**

(22) Date of filing: **22.08.83**

(51) Int. Cl.⁴: **G 08 B 25/00,** G 08 B 27/00,
H 02 J 13/00

(54) **Alarm system.**

(30) Priority: **27.08.82 GB 8224654**

(43) Date of publication of application:
**07.03.84 Bulletin 84/10**

(45) Publication of the grant of the patent:
**18.03.87 Bulletin 87/12**

(84) Designated Contracting States:
**DE FR GB IT SE**

(56) References cited:
**FR-A-2 410 317**
**US-A-3 925 763**
**US-A-4 019 139**
**US-A-4 174 517**

**WIRELESS WORLD, vol. 85, December 1979,**
**pages 46-51, Haywards Heath, Sussex, GB, N.**
**McARTHUR et al.: "The intelligent plug"**

(73) Proprietor: **MONICELL LIMITED**
**Knowsley Road Industrial Estate Haslingden**
**Rossendale Lancashire, BB4 4RX (GB)**

(72) Inventor: **Muirhead, Allen David**
**75 Grasmere Road Haslingden**
**Rossendale Lancashire (GB)**
Inventor: **Hawke, John Richard**
**Hilltop Farm Blackshawhead**
**Hebden Bridge (GB)**

(74) Representative: **Allman, Peter John et al**
**MARKS & CLERK Suite 301 Sunlight House Quay**
**Street**
**Manchester M3 3JY (GB)**

## Description

The present invention relates to an alarm system, and in particular to an alarm system which makes use of the mains power network in a building or dwelling to connect a master control unit to a number of sensor and alarm slave units. The slave units may be adapted to detect for example fire and/or intruder alarm conditions.

Conventional alarm systems comprise a master control unit which is connected to a number of slave units each comprising sensor and alarm devices by a wiring installation specifically installed for the purpose. The control unit is adapted to turn on the sensors to a state of alertness and in the event of an alert sensor being activated a signal is sent to the master control unit which turns on the alarm devices in response.

It will be appreciated that since conventional alarm systems have to be "wired in" using a wiring installation specifically installed for the purpose it is necessary to employ skilled personnel to fit the system. In addition, in order to install the system so that the wiring is unobtrusive a considerable period of time may have to be spent on the work. This adds to the cost of the system and may cause inconvenience.

It will be further appreciated that since the master control unit of the system is permanently wired in it must be in a location which is secure against for example fire or deliberate interference. In addition, in the case of intruder alarms, it is difficult to have the system turned on whilst a part of the protected premises is occupied. The user must go to the master unit to turn it on and then return to the room such as the bedroom or living room which he is occupying without activating any of the slave units. The user must also be careful not to activate any slave units when he returns to the master control unit to switch it off.

United States Patent Specification US—A— 3925763 discloses an alarm system for use in locations having a mains network. The system comprises a master unit, a slave unit having an alarm condition sensor, and an alarm indicator. The master unit, slave unit and alarm indicator are provided with means for making electrical connections to the mains network. The slave unit includes means for detecting the sensing of an alarm condition by the sensor and means for applying an alarm signal to the mains network when sensing of the alarm condition is detected. The alarm indicator is associated with means for detecting the alarm signal and means for turning on the alarm indicator when the alarm signal is detected. The alarm indicator and the alarm signal detecting means are incorporated into the master unit.

The system disclosed in US—A—3925763 is of the type in which signals can only be sent from the slave unit to the master unit and there is no provision for the transmission of control signals from the master unit to the slave unit over the mains network. Furthermore the slave unit does not include an alarm indicator.

Published U.S. Patent Specification US—A— 4174517 discloses a control system which uses the mains system of a house for transmitting signals in both directions between the central control unit and a number of slave units. The central control units and slave units plug into the normal household mains sockets and the system allows devices situated at the slave units to be turned on and off by control signals sent from the central control unit. In addition information determined by sensors at the slave units may be transmitted from the slave unit to the central unit either automatically or in response to a sense command transmitted from the central unit.

It is an object of the present invention to provide an alarm system comprising the basic features disclosed in US—A—3925763 but characterised by additional features which provides for an enhanced degree of control of the units making up the system.

According to the present invention there is provided an alarm system for use in locations provided with a mains power supply network, comprising a master unit, and at least two slave units each having an alarm condition sensor and an alarm indicator, the master unit and slave units being provided with means for making electrical connection with the mains network, wherein each slave unit includes means for detecting the sensing of an alarm condition by the sensor and means for applying an alarm signal to the mains network when sensing of the alarm condition is detected, and wherein each slave unit comprises means for detecting an alarm signal applied to the mains network by another slave unit and means for turning on its respective alarm indicator when the alarm signal is detected, characterised in that the master unit comprises means for applying slave unit control signals to the mains network, and each slave unit comprises means for turning the respective alarm condition sensor on and off in response to detected control signals, each slave unit being allocated an address code, the master unit comprising means for generating slave unit address codes for transmission with said slave unit control signals, each slave unit comprising means for detecting address codes and enabling response only to alarm and control signals transmitted with the slave unit's address code, and each slave unit comprising means for generating the address code of the or each of the other slave units for transmission with the said alarm signal.

The master unit may also be allocated an address code and respond only to signals including the address code. The coded address in each unit in the system may be different or the same. If the coded addresses are different, a slave unit generating the alarm signal must also generate each of the codes allocated to other units in the system. If the codes are the same, only the one system code need be generated.

Embodiments of the present invention will now be described, by way of example, with reference to the accompanying drawings, in which:

Fig. 1 illustrates the general structure of a fire and intruder alarm system comprising a master unit and three slave units, the master unit incorporating its own alarm indicator.

Fig. 2 illustrates the circuit of a simplified master control unit not incorporating its own alarm indicator; and

Fig. 3 illustrates signal transmit and receive circuits of a simplified slave unit for use with the master unit of Fig. 2.

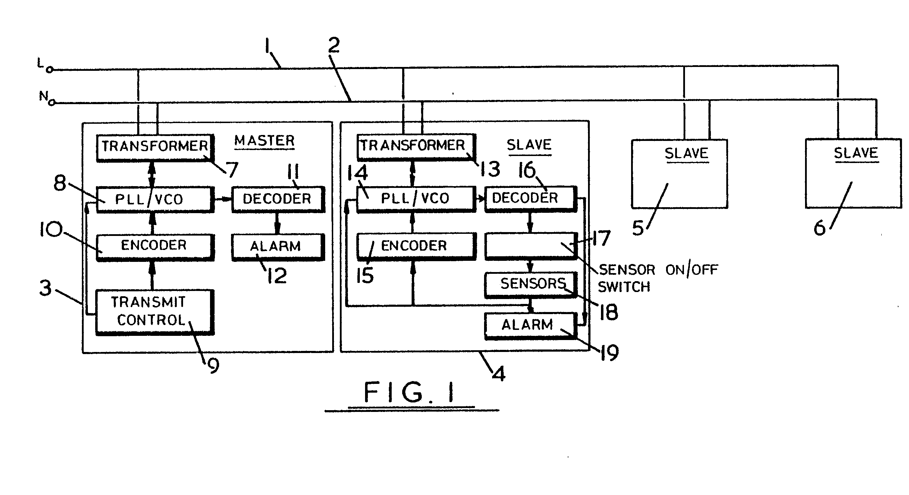

Referring to Fig. 1, a mains network is shown as lines 1 and 2 connected to live and neutral terminals respectively. A master control unit 3 and three slave units 4, 5 and 6 are connected to the mains network simply by plugging them into convenient outlets (not shown) of the network.

The master unit 3 comprises a transformer 7 which couples the unit to the mains network and a circuit 8 which operates as either a phase locked loop (PLL) or voltage control oscillator (VCO) as determined by a control input provided by a transmit control unit 9. An encoder 10 is also controlled by unit 9 to generated coded control signals for transmission over the mains network. A decoder 11 decodes signals received from the mains network and if the decoded signals indicate an alarm condition turns on an alarm indicator 12 which may be for example a speaker driven by an electronic circuit.

The three slave units 4, 5 and 6 are of the same structure and only unit 4 will be described in detail. The slave unit 4 comprises a transformer 13, PLL/VCO unit 14, encoder 15 and decoder 16 corresponding to the equivalent circuits 7, 8, 10 and 11 of the master unit. The decoder output controls a sensor on/off switch 17 which either enables or disables sensors 18. The sensors may comprise for example fire and intruder alarms of any type. When the sensors are enabled and one of them senses an alarm condition an output is provided to turn on an alarm indicator 19 and to switch the PLL/VCO unit 14 to its transmit mode. The same output also enables the encoder 15 to generate an alarm signal which is transmitted over the mains network to the master control unit and the other slave units. This causes the alarm indicators of all the units connected to the mains network to turn on. This is achieved as the alarm signal causes the decoders 11, 16 to directly turn on the alarm indicators 12, 19.

Thus, detection of an alarm condition by any slave unit turns on the alarm indicators of all the slave units and also that of the master control unit. Each slave unit is not therefore a simple passive unit which is turned on by the master control unit but rather an active unit which when turned on and activated by an alarm condition controls the entire system.

The transmit control 9 of the master unit 3 comprises a series of switches which can be manipulated to turn on selected ones of the slave units or all of them. This is achieved by allocating a particular code to each unit, including the master unit. Control signals from the master unit are preceded by an address code specific to the slave unit to be controlled. Alarm signals transmitted from the slave units comprise an automatically generated series of coded addresses followed by the alarm signal, each of the series of coded addresses identifying a respective one of the slave and master units.

With the system described, the user can plug in the slave units in rooms to be monitored and plug in the master unit in the room to be occupied. The slave units can then be turned on and off as desired from the occupied room. If an alarm condition is detected, all of the units sound the alarm, not merely the unit in the room in which the alarm condition is detected.

The alarm indicators may produce a different alarm signal in response to detection of an intruder from the alarm signal produced in response to detection of a fire. The activated slave unit may also transmit its own coded address with the alarm signal for display on the master unit to inform the user of the location of the detected intruder/fire.

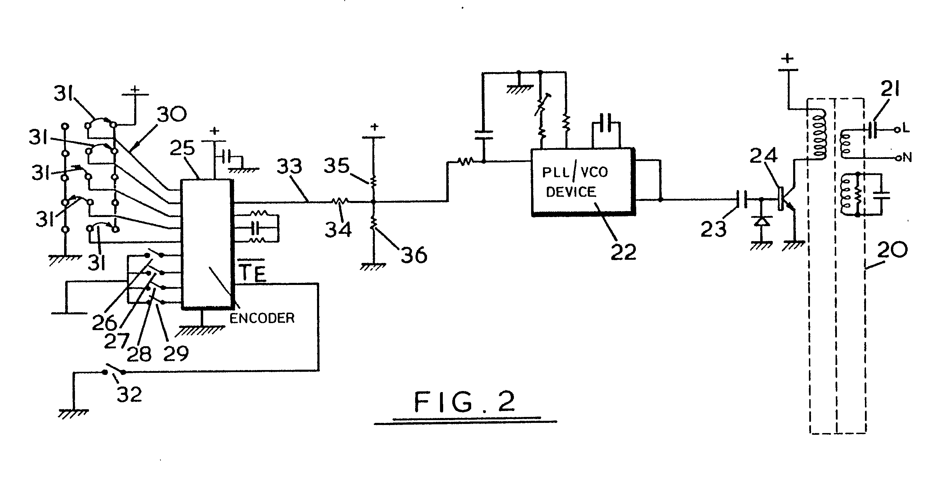

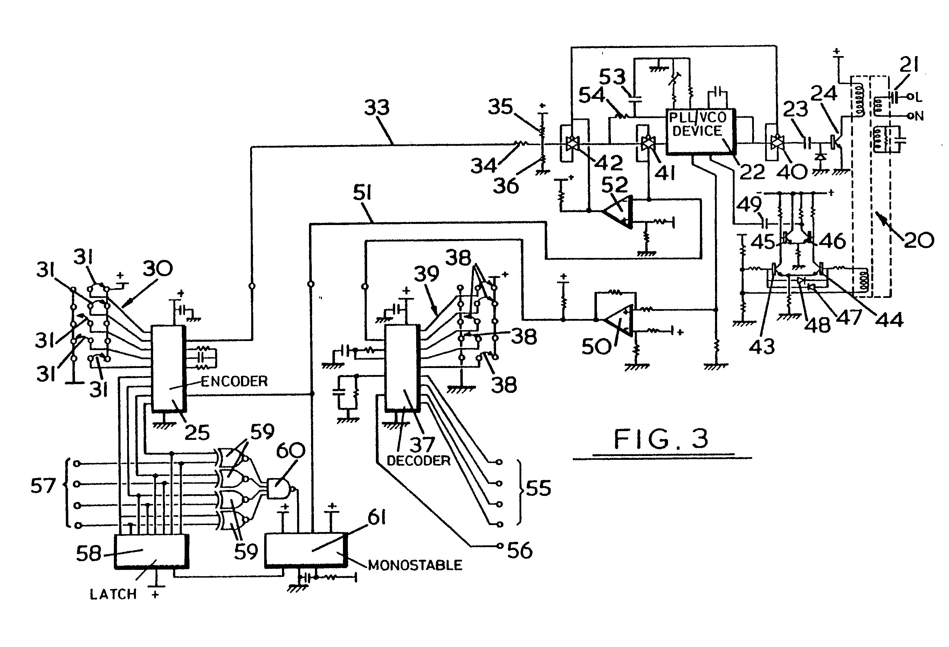

Referring now to Figs. 2 and 3, the illustrated master and slave units are for a simplified system in which each slave unit has the same address code and the master unit does not have its own alarm indicator. Such an arrangement would be appropriate to use in for example a small home.

In Fig. 2, the master unit illustrated comprises a tuned transformer 20 to which the live and neutral conductors of the mains network are connected via a mains isolating capacitor 21. The connection to the mains network is by a conventional plug which may be inserted into any convenient mains socket outlet.

Signals are coupled to the transformer 20 from a PLL/VCO device 22 (typically an MC 14046 BCP) via a capacitor 23 and a transistor 24. In the simplified system described, the device 22 is arranged to operate only as a VCO in the master unit as no signal detection capability is required. Data to be transmitted is generated by an encoder 25 (typically an MC 145026 BCP) controlled by four manually operable switches 26 to 29 depression of which indicates a wish to turn on all the slave units, turn off all the slave units, test the intruder sensors and alarm indicators, and test the fire sensors and alarm indicators respectively. The switches 26 to 29 thus provide inputs defining the command signal to be transmitted. The encoder also receives code defining inputs from an array of five trinary address lines 30, these five inputs being predetermined by hard wiring of jumpers 31 to define a coded address specific to the system but common to all the units in the system. When a switch 32 is activated, the voltage of the encoder output 33 varies in accordance with a binary data signal comprising the coded address followed by a command, i.e. turn on the slave units.

The signal encoder output 33 is applied to the VCO device 22 via an attenuation network consisting of resistors 34, 35 and 36. Changes in the voltage level of the encoder output result in changes in the frequency of the output signal of the VCO. The resulting FM signal is coupled to the mains network via transformer 20.

Referring now to Fig. 3, the transmit/receive and encode/decode components of a slave unit will be described. The slave unit comprises many components identical to those of the master unit and these components carry the same reference numerals in Figs. 2 and 3. In addition however the slave unit comprises a decoder 37 (typically an MC 145027 B) to enable the slave unit to respond to signals received over the mains network. It will be noted that the encoder of the slave unit receives the same coded address defining input from jumpers 31 as the encoder of Fig. 2, and that the decoder 37 also receives the same coded address defining input from jumpers 38 via trinary address lines 39. In addition the PLL/VCO device 22 of the slave unit and its inputs/outputs can be switched between its PLL/receive and VCO/transmit modes by control of transmission gates 40, 41 and 42.

In the receive mode of operation signals on the mains line within the passband of the tuned transformer 20 are coupled to the input of a limiting amplifier formed by transistors 43, 44, 45 and 46. Amplitude variations in the input signal are removed at this stage, the output from transistor 46 being for any input amplitude above 2 mV peak to peak a square wave. Since there is some coupling between the coils of the tuned transformer 20 intended for transmission and reception, diodes 47 and 48 are provided between the bases of transistors 43 and 44 to protect them from the high voltage levels present when the control unit operates in its transmission mode.

From the output of transistor 46, the amplitude limited input signal is coupled by means of capacitor 49 to the phase sensitive detector input of device 22, which as a result of transmission gate 41 being closed is in its phase locked loop mode. The PLL locks onto the frequency of the input signal and, in well understood manner, produces a voltage at its output which accurately analogues the original modulation signal of the input FM signal. This signal is input to an amplifier 50 where it is "cleaned up" and thence output to the decoder 37.

Operation of the transmission gates 40, 11 and 42 to switch the device 22 from its VCO mode to its PLL mode is controlled by the signal on line 51. The signal present on line 51 is connected directly to transmission gate 41 and to the input of a comparator 52, whose output is connected to transmission gates 40 and 42. When the signal present on line 51 is low the transmission gate 41 is open, but the output of the comparator 52 is high, resulting in transmission gates 40 and 42 being closed and the device 22 being switched to its VCO mode to frequency modulate data to be transmitted. When the signal present on line 51 is high transmission gate 41 is closed and transmission gates 40 and 42 are open, switching the device 22 to its PLL mode in which it demodulates frequency modulated data received. Control of the signal on line 51 is described below.

To reduce the number of sidebands produced by the FM signal on transmission and reception a single pole low pass filter consisting of capacitor 53 and resistor 54 is provided across the VCO input of the device 22.

The data input to the decoder 37 may have been initiated from the master unit or from another slave unit and accordingly the data output from the decoder may be used to enable/disable the sensors (not shown) or to turn on the alarm indicators (not shown) of the slave unit.

When the encoded data appears at the output of amplifier 50 the decoder 37 initially compares the address bits of the data block with its own address, determined by address lines 39. If there is any mismatch between the two addresses subsequent data in the data block is ignored. If however, the address in the input data is identical to the address in the decoder then the subsequent data in the data block is input to the decoder 37 where it is stored for comparison with the next data block input. So that the decoder 37 does not respond to spurious data it provides no output until two identical sets of sequential data have been input. If new data addressed to the decoder 24 does not correspond with the previously stored data the new data is stored for comparison with the next data block to be input. When identical sets of sequential data have been input to the decoder data output lines 55 are set and a valid transmission line 56 is pulsed high. The data lines 55, which carry the control data input manually at the master unit, or the alarm signal data generated by another slave unit, remain in the condition set until a new valid transmission is received to change them.

The data output to the data lines 55 is used to control the sensor on/off switch 17 (Fig. 1) and the alarm indicators 19 (Fig. 1). When the master unit transmits an on or off command, the switch 17 responds accordingly. When the master unit transmits a test command, or when a different slave unit transmits an alarm signal, the alarm indicators respond accordingly. If one or more of the slave units has sensors which it is desired to turn on selectively, e.g. separate intruder alarm sensors which respectively detect doors opening and movement within a room, it might be desired to turn on one but not the other. This can be achieved by providing a series of sensor on/off switches each controlled by different data appearing on lines 55. This is particularly useful where, for example, there is a movement sensor associated with a slave unit in a room which is to be occupied. The movement sensor may be switched off, but other sensors such as door sensors may be separately maintained in a state of alert.

The encoder 25 of Fig. 3 is arranged in a similar manner to that of Fig. 1 but receives a data input representative of the condition of the slave units alarm indicators rather than of a manually input command. Data from the alarm indicators appears on data lines 57, is latched in a latch 58 (typically an MC 14042 BCP), and input to the encoder 25 and also to logic gates 59. The other input of each logic gate 59 is connected directly to a respective one of data lines 57 and the output of each logic gate 59 is connected to a respective input of a logic gate 60. In the event that there is any change in the data present on any of the data lines 57 from that in latch 58 there will be a difference between the signals present at the inputs of at least one of the logic gates 59. This in turn causes a change in the output of logic gate 60 which triggers a monostable device 61. This holds line 51 low, enabling the encoder 25 to transmit. In this way a new transmission is initiated from the encoder 25 every time the input data on data lines 57 is modified as is the case when an alarm condition is detected and an alarm indicator is energised in the slave unit. The monostable 61 holds the lines 51 low for 1.5 seconds during which time address and data information applied to the encoder 25 is continuously passed to the input of the VCO of Fig. 1 for transmission. It will be appreciated that by holding the line 51 low the monostable device 61 opens transmission gates 40 and 42 as described above to switch the device 22 into its VCO mode.

At switch on, the data held in latch 58 will be random so that an alarm condition transmission could be initiated. To prevent the introduction of a unit into the system (e.g. as a result of plugging in a new slave unit) from initiating a false alarm, a null code can be reserved (e.g. 0000) and the encoder drive circuitry can be automatically set to this null code at power up. Thus, at power up the null code will be transmitted but ignored by all the other units in the system.

It will be appreciated that a single slave unit could be provided. In such circumstances however it would be necessary either to provide the master unit with a decoder/alarm indicator arrangement or to provide an independent decoder/alarm indicator unit so that once the slave unit initiated an alarm signal at least one remotely located alarm indicator would be activated.

**Claims**

1. An alarm system for use in locations provided with a mains power supply network (1, 2), comprising a master unit (3), and at least two slave units (4, 5, 6) each having an alarm condition sensor (18) and an alarm indicator (19), the master unit and slave units being provided with means for making electrical connection with the mains network, wherein each slave unit includes means for detecting the sensing of an alarm condition by the sensor and means (15) for applying an alarm signal to the mains network when sensing of the alarm condition is detected, and wherein each slave unit comprises means (16) for detecting an alarm signal applied to the mains network by another slave unit and means for turning on its respective alarm indicator when the alarm signal is detected, characterised in that the master unit comprises means (25) for applying slave unit control signals to the mains network, and each slave unit comprises means (37) for turning the respective alarm condition sensor on and off in response to detected control signals, each slave unit being allocated an address code, the master unit comprising means (25, 30) for generating slave unit address codes for transmission with said slave unit control signals, each slave unit comprising means (37, 38) for detecting address codes and enabling response only to alarm and control signals transmitted with the slave unit's address code, and each slave unit comprising means (25, 31) for generating the address code of the or each of the other slave units for transmission with the said alarm signal.

2. An alarm system according to claim 1, wherein the master unit comprises an alarm indicator (12) and means (11) for detecting the alarm signal and turning on the master unit alarm indicator when the alarm signal is detected, and wherein the master unit is allocated an address code, the master unit comprises means for detecting address codes enabling response only to alarm signals transmitted with the master unit's address code, and each slave unit comprises means for generating the address code of each of the other slave units and of the master unit for transmission with the said alarm signal.

3. An alarm system according to claim 1 or 2, wherein the address code generating means comprises an encoder (25), a plurality of code defining inputs (30, 31), a plurality of signal defining inputs (26, 27, 28, 29), and a transmission initiation input (32), the output of the encoder controlling a voltage controlled oscillator (22) coupled to the mains network by a tuned transformer (20).

4. An alarm system according to claim 3, wherein each slave unit comprises a latch (58) for receiving and storing the signal defining inputs applied to the encoder (25) and indicating the condition of the slave units alarm indicators, a series of gates (59) for comparing the signal defining inputs and the stored content of the latch, and a monostable circuit (61) for generating the transmission initiation input when the gates detect a difference between the signals applied to them.

5. An alarm system according to claim 1, 2, 3 or 4, wherein the address code detecting means comprises a decoder (37), a plurality of code defining inputs (38), and a data input connected to the mains network via a phase locked loop (22) and a tuned transformer (20), the decoder comparing received code data with the code defining inputs and applying subsequently received data to a plurality of data outputs (55) only after identity between received code data and the defined code has been established.

**Patentansprüche**

1. Alarmanlage zum Einsatz in eine Haupt-stromversorgungsnetz (1, 2) aufweisenden Ört-lichkeiten, umfassend eine Haupteinheit (3) und wenigstens zwei Untereinheiten (4, 5, 6) mit jeweils einem Alarmzustandsfühler (18) und einem Alarmanzeiger (19), wobei die Haupteinheit und die Untereinheiten Mittel zum elektrischen Anschluß an das Hauptstromversorgungsnetz aufweisen, wobei jede Untereinheit Mittel zum Nachweis der Erfassung eines Alarmzustands durch den Fühler und Mittel (15) zum Anlegen eines Alarmsignals an das Hauptstromversorgungsnetz bei nachweis der Erfassung des Alarmzustands hat, und wobei jede Untereinheit Mittel (16) zum Nachweis eines an das Hauptstromversorgungsnetz von einer anderen Untereinheit angelegten Alarmsignals und Mittel zum Einschalten ihres jeweiligen Alarmanzeigers bei Nachweis des Alarmsignals aufweist, dadurch gekennzeichnet, daß die Haupteinheit Mittel (25) zum Anlegen von Untereinheits-Steuersignalen an das Hauptstromversorgungsnetz umfaßt und daß jede Untereinheit Mittel (37) zum Ein- und Ausschalten des jeweiligen Alarmzustandsfühlers nach Maßgabe erfaßter Steuersignale aufweist, wobei jeder Untereinheit ein Adreßcode zugeordnet ist, die Haupteinheit Mittel (25, 30) zur Erzeugung von Untereinheits-Adreßcodes für die Übertragung zusammen mit den Untereinheits-Steuersignalen umfaßt, jede Untereinheit Mittel (37, 38) umfaßt, die Adreßcodes erfassen und ein Ansprechen nur auf mit dem Adreßcode der Untereinheit übermittelte Alarm- und Steuersignale ermöglichen, und jede Untereinheit Mittel (25, 31) zur Erzeugung des Adreßcodes der anderen Untereinheiten bzw. jeder anderen Untereinheit zur Übertragung mit dem Alarmsignal aufweist.

2. Alarmanlage nach Anspruch 1, wobei die Haupteinheit einen Alarmanzeiger (12) und Mittel (11) zum Nachweis des Alarmsignals und zum Einschalten des Haupteinheits-Alarmanzeigers bei Nachweis des Alarmsignals aufweist, und wobei der Haupteinheit ein Adreßcode zugeordnet ist, die Haupteinheit Mittel aufweist zur Erfassung von Adreßcodes, die ein Ansprechen nur auf mit dem Adreßcode der Haupteinheit übermittelte Alarmsignale ermöglichen, und jede Untereinheit Mittel aufweist, zur Erzeugung des Adreßcodes jeder anderen Untereinheit und der Haupteinheit zwecks Übermittlung mit dem Alarmsignal.

3. Alarmanlage nach Anspruch 1 oder 2, wobei die Adreßcode-Erzeugungsmittel umfassen einen Codierer (25), mehrere Codebestimmungs-Eingänge (30, 31), mehrere Signalbestimmungs-Eingänge (26, 27, 28, 29) und einen Übermittlungseinleitungs-Eingang (32), wobei der Ausgang des Codierers einen spannungsgesteuerten Oszilator (22) steuert, der über einen abgestimmten Transformator (20) mit dem Hauptstromversorgungsnetz gekoppelt ist.

4. Alarmanlage nach Anspruch 3, wobei jede Untereinheit einen Haltekreis (58), der die dem Codierer (25) zugeführten Signalbestimmungs-Eingänge, die den Zustand der Untereinheits-Alarmanzeiger bezeichnen, empfängt und speichert, eine Reihe von Verknüpfungsgliedern (59) zum Verglich der Signalbestimmungs-Eingänge und des gespeicherten Inhalts des Haltekreises sowie ein Monoflop (61) aufweist, das den Übermittlungseinleitungs-Eingang bildet, wenn die Verknüpfungsglieder eine Differenz zwischen den an sie angelegten Signalen erfassen.

5. Alarmanlage nach Anspruch 1, 2, 3 oder 4, wobei die Adreßcode-Erfassungsmittel einen Decodierer (37), mehrere Codebezeichnungs-Eingänge (38) sowie einen Dateneingang, der an das Hauptstromversorgungsnetz über eine PLL-Schaltung (22) und einen abgestimmten Transformator (20) angeschlossen ist, aufweisen, wobei der Decodierer empfangene Codeinformation mit den Codebezeichnungs-Eingängen vergleicht und anschließend empfangene Information einer Mehrzahl Datenausgängen (44) nur zuführt, nachdem Identität zwischen empfangener Codeinformation und dem bezeichneten Code festgestellt ist.

**Revendications**

1. Système d'alarme destiné à l'utilisation dans des bâtiments pourvus d'un réseau (1, 2) de fourniture d'énergie du secteur, comprenant un organe directeur (3) et au moins deux organes auxiliaires (4, 5, 6) ayant chacun un détecteur (18) de condition d'alarme et un indicateur (19) d'alarme, l'organe directeur et les organes auxiliaires étant pourvus de moyens pour établir une connexion électrique avec le réseau du secteur, système dans lequel chaque organe auxiliaire comprend un moyen pour repérer la détection d'une condition d'alarme par le détecteur et un moyen (15) pour appliquer un signal d'alarme au réseau du secteur lorsque la détection de la condition d'alarme est repérée et dans lequel, chaque organe auxilaire comprend un moyen (16) pour détecter un signal d'alarme appliqué au réseau du secteur par un autre organe auxiliaire et un moyen pour mettre en marche son indicateur d'alarme respectif lorsque le signal d'alarme est détecté, système caractérisé en ce que l'organe directeur comprend un moyen (25) pour envoyer des signaux de commande d'organe auxiliaire au réseau du secteur et chaque organe auxiliaire comprend un moyen (37) pour mettre en marche le détecteur de condition d'alarme respectif et l'arrêter en réaction aux signaux de commande détectés, chaque organe auxiliaire étant pourvu d'un code d'adresse, l'organe directeur comprenant des moyens (25, 30) pour créer des codes d'adresse d'organe auxiliaire pour la transmission des signaux de commande d'organe auxiliaire, chaque organe auxiliaire comprenant des moyens (37, 38) pour détecter les codes d'adresse et permettre de ne réagir qu'aux signaux d'alarme et de commande transmis avec le code d'adresse d'organe auxiliaire et chaque organe auxiliaire comprenant des moyens (25, 31) pour créer le code d'adresse de l'organe auxiliaire ou de chacun des organes auxiliaires pour la transmission du signal d'alarme.

2. Système d'alarme selon la revendication 1, caractérisé en ce que l'organe directeur comprend un indicateur (12) d'alarme et un moyen (11) pour détecter le signal d'alarme et mettre en

**0 102 229**

marche l'indicateur d'alarme de l'organe directeur lorsque le signal d'alarme est détecté, et dans lequel l'organe directeur est muni d'un code d'adresse, l'organe directeur comprend un moyen pour détecter les codes d'adresse, permettant de ne réagir qu'aux signaux d'alarme transmis avec le code d'adresse d'organe directeur et chaque organe auxiliaire comprend un moyen pour créer le code d'adresse de chacun des autres organes auxiliaires et de l'organe directeur pour la transmission du signal d'alarme.

3. Système d'alarme selon la revendications 1 ou 2, caractérisé en ce que le moyen créant le code d'adresse comprend un codeur (25), une pluralité d'entrées (30, 31) définissant le code, une pluralité d'entrées (26, 27, 28, 29) définissant le signal et une entrée (32) d'initiation de transmission, la sortie du codeur commandant un oscillateur (22) commandé par la tension, couplé au réseau du secteur par un transformateur (20) accordé.

4. Système d'alarme selon la revendication 3, caractérisé en ce que chaque organe auxiliaire comprend un latch (58) pour recevoir et stocker les entrées de définition de signal appliquées au codeur (25) et indiquant la condition des indicateurs d'alarme des organes auxiliaires, une série de portes (59) pour comparer les entrées de définition de signal et le contenu stocké du latch et un circuit monostable (61) pour créer l'entrée d'initiation de transmission lorsque les portes détectent une différence entre les signaux qui leur sont appliqués.

5. Système d'alarme selon les revendications 1, 2, 3 ou 4, caractérisé en ce que le moyen détecteur de code d'adresse comprend un décodeur (37), une pluralité d'entrées (38) définisseuses de codes et une entrée de donnée reliée au réseau du secteur à travers une boucle (22) à verrouillage de phase et un transformateur (20) accordé, le décodeur comparant les données de code reçues avec les entrées définisseuses de code et appliquant les données reçues subséquemment à une pluralité de sorties (55) de donnée seulement après l'établissement de l'identité des données de code reçues et du code défini.

FIG. 1

31 30 25 33 35 31 31 31 31 TE 34 36 26 27 28 29 ENCODER 32 PLL/VCO DEVICE 22 23 24 21 L N 20

FIG. 2

0 102 229

FIG. 3

3